# EUROPEAN PATENT SPECIFICATION

(11) **EP 3 808 978 B1**
(45) Date of publication and mention of the grant of the patent: **22.03.2023**
(21) Application number: 18929903.5
(22) Date of filing: 14.12.2018
(51) Int. Cl.: F04B 27/24, F04B 49/06, F24F 11/65, F24F 11/77, F24F 11/84, F24F 11/86, F25B 13/00, F25B 49/02, F04B 27/00

(54) **METHOD AND APPARATUS FOR CONTROLLING COMPRESSOR TO SWITCH CYLINDER MODE, MACHINE SET, AND AIR CONDITIONER SYSTEM**
VERFAHREN UND VORRICHTUNG ZUR STEUERUNG DES KOMPRESSORS ZUR ZYLINDERMODUSUMSCHALTUNG, MASCHINENSATZ UND KLIMAANLAGE
PROCÉDÉ ET APPAREIL PERMETTANT DE COMMANDER UN COMPRESSEUR POUR COMMUTER UN MODE DE CYLINDRE, ENSEMBLE DE MACHINE ET SYSTÈME DE CLIMATISEUR

(30) Priority: 17.08.2018 CN 201810943382
(43) Date of publication of application: 21.04.2021
(73) Proprietor: Gree Electric Appliances, Inc. of Zhuhai, Zhuhai, Guangdong 519070 (CN)
(72) Inventor: LIU, Hua, Zhuhai, Guangdong 519070 (CN); LIU, Qunbo, Zhuhai, Guangdong 519070 (CN); XU, Ke, Zhuhai, Guangdong 519070 (CN); LI, Longfei, Zhuhai, Guangdong 519070 (CN); RONG, Yaopeng, Zhuhai, Guangdong 519070 (CN)
(74) Representative: Nevett, Duncan
(86) International application number: PCT/CN2018/121220
(87) International publication number: WO 2020/034510

(56) References cited:
- CN-A- 103 884 081
- CN-A- 107 860 161
- US-A- 5 537 831

## Description

### CROSS-REFERENCE TO RELATED APPLICATIONS

The present disclosure is based on and claims priority from CN application No. 201810943382.X entitled " METHOD AND APPARATUS FOR CONTROLLING COMPRESSOR TO SWITCH CYLINDER MODE, UNIT, AND AIR CONDITIONER SYSTEM", filed on August 17, 2018.

### TECHNICAL FIELD

The present disclosure relates to the technical field of units, in particular to a method and a device for controlling cylinder switching of a compressor, a unit and an air conditioning system.

### BACKGROUND

At present, in order to solve the problems of low load and poor energy efficiency of a multi-split unit, a single-cylinder / double-cylinder switching technology of a compressor is developed. In the actual operation of unit, the phenomenon of cylinder switching failure of compressor is comparatively common. For example: when the unit is in the ultra-low temperature heating starting stage (the ambient temperature is extremely low), the compressor often cannot be switched to the double-cylinder operation. For another example, in the process of cylinder switching of the compressor, the normal cylinder switching of the compressor may be affected by the change of components such as a fan and an electronic expansion valve in a unit. All these factors may cause the compressor unable to switch the cylinder normally, which reduces the reliability of cylinder switching, reduces the energy efficiency of the unit and affects user experience.

In view of the changes in the components such as the fan and electronic expansion valve in the unit and the problem that the compressor is prone to fail to switch the cylinder under special circumstances in the prior art, no effective solution has been proposed.

CN103884081A relates a control method of an air conditioner system. The air conditioner system comprises a compressor having a single-cylinder state and a double-cylinder state.

### SUMMARY

According to a first aspect of the embodiments of the present disclosure, there is provided a control method for switching a cylinder operation mode of a compressor comprising: determining the compressor needs to be switched from a single-cylinder operation mode to a double-cylinder operation mode; deciding whether a system pressure difference value is in a first preset system pressure difference value interval; adjusting system control parameters to make the system pressure difference value to be in the first preset system pressure difference value interval under a condition that the system pressure difference value is not in the first preset system pressure difference value interval; and controlling the compressor to be switched from the single-cylinder operation mode to the double-cylinder operation mode.

In some embodiments, the determining the compressor needs to be switched from the single-cylinder operation mode to the double-cylinder operation mode comprises: determining the compressor needs to be switched from the single-cylinder operating mode to the double-cylinder operating mode under a condition that a current required operation frequency of the compressor is greater than a maximum frequency threshold value reached by the compressor in the single-cylinder operating mode, wherein the current required operation frequency of the compressor is determined according to at least one of the following three factors: a difference value between a preset temperature value and an ambient temperature value, a preset gear of a fan or a capacity of an indoor unit of an air conditioning unit where the compressor is located.:

In some embodiments, the adjusting system control parameters to make the system pressure difference value to be in the first preset system pressure difference value interval comprises at least one of the following steps: reducing a rotation speed of an outdoor fan and a rotation speed of an indoor fan; or reducing a step count of an electronic expansion valve of an outdoor unit and a step count of an electronic expansion valve of an indoor unit.

In some embodiments, the reducing the rotation speed of the outdoor fan and the rotation speed of the indoor fan comprises: controlling the outdoor fan and the indoor fan to be turned off; the reducing the step count of the electronic expansion valve of the outdoor unit and the step count of the electronic expansion valve of the indoor unit comprises: controlling the electronic expansion valve of the outdoor unit and the electronic expansion valve of the indoor unit to be turned off.

In some embodiments, the method further comprising: controlling the outdoor fan and the indoor fan to return to a normal operation state under a condition that the adjusting system control parameters to make the system pressure difference value to be in the first preset system pressure difference value interval comprises the reducing the rotation speed of the outdoor fan and the rotation speed of the indoor fan after the controlling the compressor to be switched from the single-cylinder operation mode to the double-cylinder operation mode, and the normal operation state is an automatic control state; or controlling the electronic expansion valve of the outdoor unit and the electronic expansion valve of the indoor unit to return to a normal operation state under a condition that the adjusting system control parameters to make the system pressure difference value to be in the first preset system pressure difference value interval comprises the reducing the step count of the electronic expansion valve of the outdoor unit and the step count of the electronic expansion valve of the indoor unit after the controlling the compressor to be switched from the single-cylinder operation mode to the double-cylinder operation mode, and the normal operation state is an automatic control state.

In some embodiments, the method further comprising: providing single-cylinder torque compensation to the compressor before the controlling the compressor to be switched from the single-cylinder operation mode to the double-cylinder operation mode.

In some embodiments, the method further comprising: providing double-cylinder torque compensation to the compressor after the controlling the compressor to be switched from the single-cylinder operation mode to the double-cylinder operation mode.

In some embodiments, the method further comprising: controlling a first electromagnetic valve to be powered down and a second electromagnetic valve to be powered up to make a variable capacitance port of the compressor to be in a low- state before the controlling the compressor to be switched from the single-cylinder operation mode to the double-cylinder operation mode, wherein the first electromagnetic valve is used for communicating an air outlet port of the compressor with the variable capacitance port, and the air outlet port is in a high-pressure state, the second electromagnetic valve is used for communicating an air suction port of the compressor with the variable capacitance port, and the air suction port is in a low-pressure state.

In some embodiments, the controlling the compressor to be switched from the single-cylinder operation mode to the double-cylinder operation mode comprises: controlling a first electromagnetic valve to be powered up and a second electromagnetic valve to be powered down to make a variable capacitance port of the compressor to be in a high-pressure state, wherein the first electromagnetic valve is used for communicating an air outlet port of the compressor with the variable capacitance port, and the air outlet port is in a high-pressure state, the second electromagnetic valve is used for communicating an air suction port of the compressor with the variable capacitance port, and the air suction port is in a low-pressure state.

According to a second aspect of the embodiments of the present disclosure, there is provided an air conditioning unit comprising: a compressor; a main controller configured to determine the compressor needs to be switched from a single-cylinder operation mode to a double-cylinder operation mode, decide whether a system pressure difference value is in a first preset system pressure difference value interval, adjust system control parameters to make the system pressure difference value to be in the first preset system pressure difference value interval under a condition that the system pressure difference value is not in the first preset system pressure difference value interval, and send a cylinder switching command to a driving controller of the compressor; the driving controller, connected with the main controller and the compressor, configured to control the compressor to be switched from the single-cylinder operation mode to the double-cylinder operation mode according to the cylinder switching command.

According to a third aspect of the embodiments of the present disclosure, there is provided a control apparatus for switching a cylinder operation mode of a compressor comprising: a determining module, configured to determine the compressor needs to be switched from a single-cylinder operation mode to a double-cylinder operation mode; a deciding module, configured to decide whether a system pressure difference value is in a first preset system pressure difference value interval; an adjusting module, configured to adjust system control parameters to make the system pressure difference value to be in the first preset system pressure difference value interval under a condition that a deciding result of the deciding module is that the system pressure difference value is not in the first preset system pressure difference value interval; a control module, configured to control the compressor to be switched from the single-cylinder operation mode to the double-cylinder operation mode

According to a fourth aspect of the embodiments of the present disclosure, there is provided an air conditioning system comprising the above mentioned air conditioning unit.

In some embodiments, the air conditioning system is a variable frequency and variable capacity air conditioning system.

According to a fifth aspect of the embodiments of the present disclosure, there is provided a computer device comprising: a processor; and a memory coupled to the processor, storing program instructions which, when executed by the processor, cause the processor to implement the above mentioned methods.

According to a fifth aspect of the embodiments of the present disclosure, there is provided a computer readable storage medium, wherein the computer readable storage medium stores computer instructions which, when executed by a processor, implement the above mentioned methods.

### BRIEF DESCRIPTION OF THE DRAWINGS

FIG. 1 is a flow diagram of a control method for switching a cylinder operation mode of a compressor in accordance with one embodiment of the present disclosure;
FIG. 2 is a flow diagram of a control method for switching a cylinder operation mode of a compressor in accordance with another embodiment of the present disclosure;
FIG. 3 is a flow diagram of control method for switching a cylinder operation mode of a compressor in accordance with still another embodiment of the present disclosure;
FIG. 4 is a flow diagram of a control method for switching a cylinder operation mode of a compressor in accordance with still another embodiment of the present disclosure;
FIG. 5 is a block diagram of the structure of a unit according to one embodiment of the present disclosure;
FIG. 6 is a block diagram of the structure of a unit according to another embodiment of the present disclosure;
FIG. 7 is a block diagram of the structure of an control apparatus for switching a cylinder operation mode of a compressor according to one embodiment of the present disclosure.

### DETAILED DESCRIPTION

The present disclosure is described in further detail below with reference to the attached drawings and specific embodiments, and it should be understood that the specific embodiments described herein are merely illustrative of the present disclosure and are not intended to limit the present disclosure.

In the following description, suffixes such as "module", "component" or "unit" used to indicate elements are used only for facilitating the description of the present disclosure, and have no particular meaning in themselves. Thus, "module", "component" or "unit" may be used mixedly.

When the unit is in a special environment, for example, when the unit is in a heating start-up stage at an ultra-low temperature, a compressor often cannot be switched to a double-cylinder operation mode from a single cylinder operation mode. This is because a system pressure difference value is small at this time, a rising speed is slow, and the system pressure difference value required when the compressor is in the double-cylinder operation mode cannot be reached in a short time. Changes of components such as a fan, an electronic expansion valve and the like in the unit can also cause the fluctuation of the system pressure difference value, thereby affecting the normal cylinder switching of the compressor.

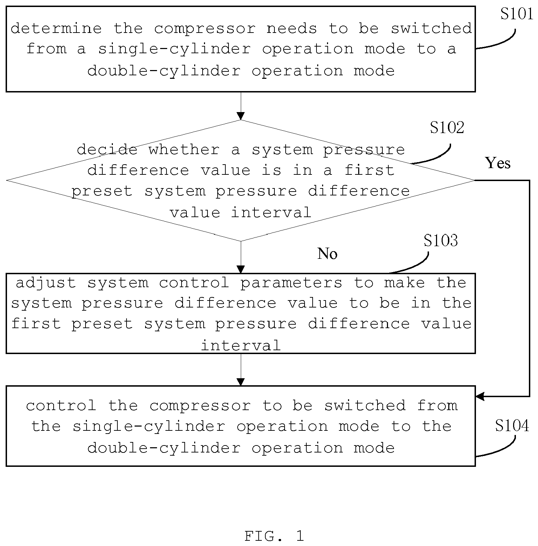

In order to solve the problem of failure of switching the cylinder operation mode of the compressor because the system pressure difference value cannot meet the conditions of cylinder switching conditions of the compressor in the prior art, a control method for switching a cylinder operation mode of a compressor is provided in the present disclosure. As shown in FIG. 1, the method comprises:

In step S101, it is determined the compressor needs to be switched from a single-cylinder operation mode to a double-cylinder operation mode.

In step 5102, it is decided whether a system pressure difference value is in a first preset system pressure difference value interval. A step S103 is performed under a condition that the system pressure difference value is not in the first preset system pressure difference value interval. A step S104 is directly performed under a condition that the system pressure difference value is not in the first preset system pressure difference value interval.

In step S103, system control parameters is adjusted to make the system pressure difference value to be in the first preset system pressure difference value interval.

In step S104, the compressor is controlled to be switched from the single-cylinder operation mode to the double-cylinder operation mode.

In the embodiment, firstly it is determined that the compressor needs to be switched from a single-cylinder operation mode to a double-cylinder operation mode, then it is decided whether the system pressure difference value is in a first preset system pressure difference value interval. If not, system control parameters is adjusted to make the system pressure difference value to be in the first preset system pressure difference value interval, and the compressor is controlled to be switched from the single-cylinder operation mode to the double-cylinder operation mode. Therefore, when the system pressure difference value meets the system pressure difference value condition required by the double-cylinder operation of the compressor, namely the system pressure difference value is in a first preset system pressure difference value interval, the compressor is controlled to be switched from the single-cylinder operation mode to the double-cylinder operation mode, and the system pressure difference value has been stable enough to ensure that the compressor is stabilized in the double-cylinder operation state, which ensures the energy efficiency of the unit and improves the use experience of the user.

In some embodiments, the method further comprises: starting the unit before it is determined the compressor needs to be switched from a single-cylinder operation mode to a double-cylinder operation mode in the step S101.

It can be understood that it is determined the compressor needs to be switched from a single-cylinder operation mode to a double-cylinder operation mode in the step S101 comprises: it is determined the compressor needs to be switched from the single-cylinder operating mode to the double-cylinder operating mode under a condition that a current required operation frequency of the compressor is greater than a maximum frequency threshold value reached by the compressor in the single-cylinder operating mode. The current required operation frequency of the compressor is determined according to at least one of the following three factors: a difference value between a preset temperature value and an ambient temperature value, a preset gear of a fan or a capacity of an indoor unit of a unit where the compressor is located.

The unit is taken as an air conditioner unit for example, it is shows that when the requirement of a user on the refrigerating or heating capacity of the air conditioner is higher, such that the compressor in a single-cylinder operation mode cannot meet the refrigerating capacity or the heating capacity required by the user, the compressor can be switched to a double-cylinder operation mode to improve the refrigerating capacity or heating capacity of the air conditioner. In some embodiments, if the ambient temperature value is -30°C, and when the user needs to start the heating mode of the air conditioner, the temperature value set by the remote controller is 18°C, the difference value between the set temperature value and the ambient temperature value is large. If the user sets a gear of the fan to be a strong gear (indicating that the user has a high requirement on the heating capacity of the air conditioner), the operation frequency required by the compressor can be determined according to the relationship between the above parameters and the operation frequency of the compressor. It is determined whether the frequency has exceeded a maximum frequency threshold that can be tolerated in the single cylinder operation mode of the compressor. If so, the compressor is controlled to be switched from the single-cylinder operation mode to the double-cylinder operation mode to satisfy the use experience of the user.

In addition, in the multi-split system, the requirement on the refrigerating capacity or heating capacity of the air conditioner can be improved when the capacity of an indoor unit is increased (for example, a user opens the air conditioner in a living room and then opens the air conditioner in a bedroom), and the compressor can be controlled in a double-cylinder mode when the single-cylinder operation mode cannot meet the requirement of the user.

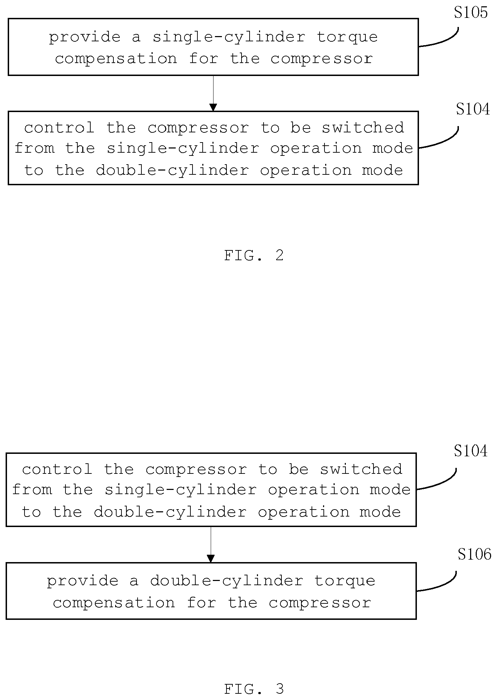

In some embodiments, as shown in FIG. 2, before the compressor is controlled to switch from the single-cylinder operation mode to the double-cylinder operation mode in step S104, the method further comprises:

In step S105, a single-cylinder torque compensation is provided for the compressor.

In some embodiments, as shown in FIG. 3, after the compressor is controlled to switch from the single-cylinder operation mode to the double-cylinder operation mode in step S104, the method further comprises:
In step S106, a double-cylinder torque compensation is provided for the compressor.

Taking an air conditioner as an example, in the prior art, when a user is in a low-temperature environment, the heating mode of the air conditioner is often required to be started, and when the double-cylinder operation mode of the air conditioner is required, as the ambient temperature is low and the air conditioner has just started, it will cause the system pressure difference value to be small and the increase rate to be slow (namely, the building speed of the system pressure difference value is low). When the system pressure difference value is not raised to a first preset system pressure difference value interval, the compressor cannot be operated in a double-cylinder operation mode but in a single-cylinder operation mode, so that the heating effect is poor. Meanwhile, a drive controller provides double-cylinder torque compensation for the compressor, so that the compressor body vibrates excessively, the rotation is unbalanced, and the compressor is damaged in severe cases. In the embodiment, after the unit is started, the compressor is firstly ensured to operate in a single-cylinder operation mode, and the system pressure difference value is gradually increased by adjusting the system control parameters until it is in a first preset system pressure difference value interval. In the process, the drive controller provides single-cylinder torque compensation for the compressor, so that damage caused by excessive vibration of the compressor can be avoided. When the system pressure difference value is in a first preset system pressure difference value interval, namely the condition of switching to the double-cylinder operation mode is met, the compressor is controlled to be switched from the single-cylinder operation mode to the double-cylinder operation mode, and double-cylinder torque compensation is provided for the compressor so as to provide correct and appropriate driving force. Therefore, the damage of the compressor caused by the improper torque compensation or the wrong compensation corresponding relation can be avoided.

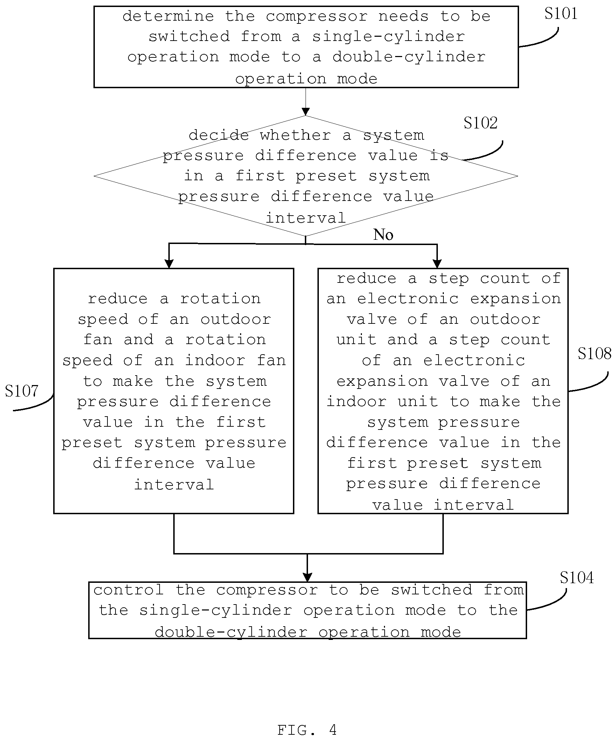

In some embodiments, as shown in FIG. 4, the system control parameter is adjusted to make the system pressure difference value in the first preset system pressure difference value interval in the step S103 comprises at least one of the following steps:
In step S107, a rotation speed of an outdoor fan and a rotation speed of an indoor fan are reduced to make the system pressure difference value in the first preset system pressure difference value interval.

In step S108, a step count of an electronic expansion valve of an outdoor unit and a step count of an electronic expansion valve of an indoor unit are reduced to make the system pressure difference value in the first preset system pressure difference value interval.

A rotation speed of an outdoor fan and a rotation speed of an indoor fan are reduced in step S107 comprises: the outdoor fan and the indoor fan are controlled to be turned off. A step count of an electronic expansion valve of an outdoor unit and a step count of an electronic expansion valve of an indoor unit are reduced in step S108 comprises: the electronic expansion valve of the outdoor unit and the electronic expansion valve of the indoor unit are controlled to be turned off.

The reduction of the rotation speed of the outdoor fan and turning off the outdoor fan can prevent the reduction of the system high pressure caused by the faster heat dissipation of the condenser when the outdoor fan is turned on. Reducing the rotation speed of the indoor fan and turning off the indoor fan can prevent the rise of system low pressure caused by the rapid heat absorption of the evaporator when the indoor fan is turned on. The system pressure difference value is the difference value between the system high pressure and the system low pressure, and when the system high pressure rises and the system low pressure falls, the system pressure difference value can be ensured to be established quickly. Moreover, reducing the step count of the electronic expansion valve of the outdoor unit and the electronic expansion valve of the indoor unit and turning off the electronic expansion valve of the outdoor unit and the electronic expansion valve of the indoor unit can also cause the increase of the system pressure difference value.

The step S107 and the step S108 can be executed alternatively or in parallel, which is not limited in the present disclosure.

After the compressor is controlled to switch from the single-cylinder operation mode to the double-cylinder operation mode in step S104, the method further comprises: the outdoor fan and the indoor fan are controlled to return to a normal operation state under a condition that the rotation speed of the outdoor fan and the rotation speed of the indoor fan are reduced.

The electronic expansion valve of the outdoor unit and the electronic expansion valve of the indoor unit are controlled to return to a normal operation state under a condition that the step count of an electronic expansion valve of an outdoor unit and the step count of an electronic expansion valve of an indoor unit are reduced.

The normal operating state is an automatic control state. After the compressor is switched from the single-cylinder operation mode to the double-cylinder operation mode, the electronic expansion valves and the indoor and outdoor fans of the indoor unit and outdoor unit are all automatically controlled. In the automatic control state, the electronic expansion valves of the indoor unit and outdoor unit, the indoor fan and outdoor fans can correspondingly adjust the control parameters according to the regulation and control information (such as a gear of the fan) sent by a user through a remote controller, the operation mode (cooling mode or heating mode) of the air conditioner and the like, thereby avoiding influencing the normal operation of the air conditioner and meeting the requirements of the user.

In some embodiments, before the compressor is controlled to switch from the single-cylinder operation mode to the double-cylinder operation mode in step S104, the method further comprises:
A first electromagnetic valve is controlled to be powered down and a second electromagnetic valve is controlled to be powered up to make a variable capacitance port of the compressor to be in a low-pressure state.

After the compressor is controlled to switch from the single-cylinder operation mode to the double-cylinder operation mode in step S104, the method further comprises: the first electromagnetic valve is controlled to be powered up and the second electromagnetic valve is controlled to be powered down to make a variable capacitance port of the compressor to be in a high-pressure state.

The first electromagnetic valve is used for communicating an air outlet port of the compressor with the variable capacitance port, and the air outlet port is in a high-pressure state. The second electromagnetic valve is used for communicating an air suction port of the compressor with the variable capacitance port, and the air suction port is in a low-pressure state. When the first electromagnetic valve is powered down, a branch where the first electromagnetic valve is located is determined in an open circuit state. When the first electromagnetic valve is powered up, a branch where the first electromagnetic valve is located is determined in an on state. When the second electromagnetic valve is powered down, the branch where the second electromagnetic valve is located is determined in an open circuit state. When the second electromagnetic valve is powered up, the branch where the second electromagnetic valve is located is determined in an on state.

The compressor is controlled to be in a single-cylinder state or a double-cylinder state by powering up or powering down the first electromagnetic valve and the second electromagnetic valve. It will be appreciated that the single cylinder compressor and double cylinder compressor are not limited to this configuration.

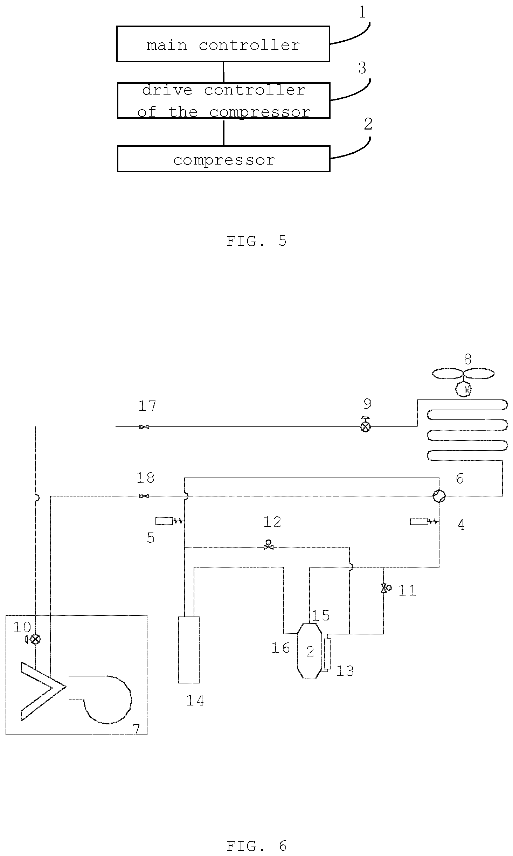

FIG. 5 shows a unit according to an embodiment of the present disclosure for performing the method shown in the above embodiment, which comprises: a main controller 1, a compressor 2 and a drive controller 3 of the compressor 2.

The main controller 1 is configured to determine the compressor 2 needs to be switched from a single-cylinder operation mode to a double-cylinder operation mode, decide whether a system pressure difference value is in a first preset system pressure difference value interval, adjust system control parameters to make the system pressure difference value to be in the first preset system pressure difference value interval under a condition that the system pressure difference value is not in the first preset system pressure difference value interval, and send a cylinder switching command to the driving controller 3.

The driving controller 3 is connected with the main controller 1 and the compressor 2, and is configured to control the compressor 2 to be switched from the single-cylinder operation mode to the double-cylinder operation mode according to the cylinder switching command.

In some embodiments, as shown in FIGS. 5 and 6, the air conditioning unit further comprises: a high pressure sensor 4 and a low pressure sensor 5 respectively connected to the compressor 2.

The high pressure sensor 4 is used for detecting a system high pressure.

The low pressure sensor 5 is used for detecting a system low pressure.

The system pressure difference value is the difference value between the system high pressure and the system low pressure.

In some embodiments, the main controller 1 is further configured to determine that the compressor 2 needs to be switched from the single-cylinder operation mode to the double-cylinder operation mode under a condition that the currently required operation frequency of the compressor 2 is greater than a maximum frequency threshold reached by the compressor 2 in the single-cylinder operation mode. The currently required operation frequency of the compressor 2 is determined according to at least one of the following three factors: a difference value between a preset temperature value and an ambient temperature value, a preset gear of a fan or a capacity of an indoor unit of an air conditioning unit where the compressor is located.

In some embodiments, the main controller 1 is also configured to control the start of the unit before it is determined that the compressor 2 needs to be switched from the single-cylinder operation mode to the double-cylinder operation mode.

In some embodiments, as shown in FIGS. 5 and 6, the unit further comprises: an indoor fan 7, an outdoor fan 8, an electronic expansion valve 9 of the outdoor unit and an electronic expansion valve 10 of the indoor unit which are connected with the main controller 1.

The main controller 1 is further configured to reduce the rotation speeds of the outdoor fan 8 and the indoor fan 7 to make the system pressure difference value be in a first preset system pressure difference value interval under a condition that the system control parameters are adjusted to make the system pressure difference value be in the first preset system pressure difference value interval, and/or reduce the step count of the electronic expansion valve 9 of the outdoor unit and the electronic expansion valve 10 of the indoor unit to make the system pressure difference value to be in a first preset system pressure difference value interval.

The reducing the rotation speed of the outdoor fan 8 and the indoor fan 7 comprises: turning off the outdoor fan 8 and the indoor fan 7, the reducing the step count of the electronic expansion valve 9 of the outdoor unit and the electronic expansion valve 10 of the indoor unit comprises turning off the electronic expansion valve 9 of the outdoor unit and the electronic expansion valve 10 of the indoor unit.

After the compressor 2 is controlled to be switched from the single-cylinder operation mode to the double-cylinder operation mode, the outdoor fan 8 and the indoor fan 7 are controlled to be in a normal operation state under a condition that the rotation speeds of the outdoor fan 8 and the indoor fan 7 are reduced, and the electronic expansion valve 9 of the outdoor unit and the electronic expansion valve 10 of the indoor unit are controlled to return to the normal operation state under a condition that the step count of the electronic expansion valve 9 of the outdoor unit and the electronic expansion valve 10 of the indoor unit are reduced.

In some embodiments, there are a plurality of indoor fans 7 and electronic expansion valves 10 of the indoor unit. For example, in a multi-split system, each indoor fan 7 corresponds to one electronic expansion valve 10 of the indoor unit. In FIG. 6, it takes one indoor fan 7 and one electronic expansion valve 10 of the indoor unit as an example.

In some embodiments, the drive controller 3 is further configured to provide single-cylinder torque compensation for the compressor 2 before the compressor 2 is controlled to switch from the single-cylinder operation mode to the double-cylinder operation mode, and provide double-cylinder torque compensation for the compressor 2 after the compressor 2 is controlled to switch from the single-cylinder operation mode to the double-cylinder operation mode.

In some embodiments, as shown in FIGS. 5 and 6, the main controller 1 is further configured to control the first electromagnetic valve 11 to be powered down and the second electromagnetic valve 12 to be powered up when sending the single-cylinder operation instruction to the drive controller 3 to make the variable-capacity port 13 of the compressor 2 to be in a low-pressure state. The main controller 1 is further configured to control the first electromagnetic valve 11 to be powered up and the second electromagnetic valve 12 to be powered down when sending a cylinder switching instruction to the drive controller 3 to make the variable capacity port 13 of the compressor 2 to be in a high-pressure state. The first electromagnetic valve 11 is used for communicating an air outlet port 15 of the compressor 2 with the variable capacitance port 13, and the air outlet port 15 is in a high-pressure state. The second electromagnetic valve 12 is used for communicating an air suction port 16 of the compressor 2 with the variable capacitance port 13, and the air suction port 16 is in a low-pressure state.

In some embodiments, the unit also comprises a gas-liquid separator 14, a first valve 17 disposed between the electronic expansion valve 9 of the outdoor unit and the electronic expansion valve 10 of the indoor unit, and a second valve 18 disposed between a four-way valve 6 and the electronic expansion valve 10 of the indoor unit.

Under a condition that the system pressure difference value meets the system pressure difference value condition required by the double-cylinder operation of the compressor, namely the system pressure difference value is in a first preset system pressure difference value interval, the compressor 2 is controlled to be switched from the single-cylinder operation mode to the double-cylinder operation mode, and the system pressure difference value is stable enough to ensure that the compressor is stabilized in the double-cylinder operation state. The energy efficiency of the unit is ensured, and the use experience of the user is improved.

When the compressor 2 operates in a single-cylinder mode, proper single-cylinder torque compensation is provided for the compressor 2, so that the damage caused by overlarge vibration of the compressor 2 can be avoided.

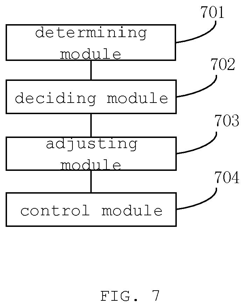

FIG. 7 shows a control apparatus for switching a cylinder operation mode of a compressor according to one embodiment of the present disclosure, which is used in the method of the first embodiment, the apparatus comprises:
A determining module 701 is configured to determine the compressor needs to be switched from a single-cylinder operation mode to a double-cylinder operation mode.

A deciding module 702 is configured to decide whether a system pressure difference value is in a first preset system pressure difference value interval.

An adjusting module 703 is configured to adjust system control parameters to make the system pressure difference value to be in the first preset system pressure difference value interval under a condition that a deciding result of the deciding module is that the system pressure difference value is not in the first preset system pressure difference value interval.

A control module 704 is configured to control the compressor to be switched from the single-cylinder operation mode to the double-cylinder operation mode.

Therefore, the compressor can be guaranteed to be stably maintained in a double-cylinder operation state, which guarantees the energy efficiency of the unit and improves the use experience of the user.

In some embodiments, the present disclosure also provides an air conditioning system which comprises the unit shown in the FIGS. 5 and 6.

In some embodiments, the air conditioning system is a variable frequency and variable capacity air conditioning system. In some embodiments, the air conditioning system is a multi-split system.

It should be noted that, in this present disclosure, the terms "comprise", "include" or any other variation thereof, are intended to cover a non-exclusive inclusion, such that a process, method, article, or device that comprises a list of elements does not include only those elements but may include other elements not expressly listed or inherent to such process, method, article, or device. Without further limitation, an element identified by the phrase "comprising a..." does not exclude the presence of other identical elements in the process, method, article, or device that comprises the element.

The above-mentioned serial numbers of the embodiments of the present disclosure are merely for description, and do not represent the advantages and disadvantages of the embodiments.

Through the description of the foregoing embodiments, it is clear to those skilled in the art that the method of the foregoing embodiments may be implemented by software plus a necessary general hardware platform, and certainly may also be implemented by hardware, but in many cases, the former is a better implementation. Based on such understanding, the technical solutions of the present disclosure or portions thereof that contribute to the prior art may be embodied in the form of a software product, which is stored in a storage medium (such as ROM/RAM, magnetic disk, optical disk) and includes instructions for enabling a mobile terminal (which may be a mobile phone, a computer, a server, an air conditioner, or a network device) to execute the method according to the embodiments of the present disclosure.

While the present embodiments have been described with reference to the accompanying drawings, it is to be understood that the present invention is not limited to the above-described embodiments, which are intended to be illustrative rather than restrictive, and that various changes and modifications may be effected therein by one of ordinary skill in the pertinent art without departing from the scope of the present invention as defined by the appended claims.

## Claims

1. A control method for switching a cylinder operation mode of a compressor, **characterized by** comprising:
determining the compressor needs to be switched from a single-cylinder operation mode to a double-cylinder operation mode (S101) ;
deciding whether a system pressure difference value is in a first preset system pressure difference value interval (S102) ;
adjusting system control parameters to make the system pressure difference value to be in the first preset system pressure difference value interval (S103) under a condition that the system pressure difference value is not in the first preset system pressure difference value interval; and
controlling the compressor to be switched from the single-cylinder operation mode to the double-cylinder operation mode (S104) .

2. The control method according to claim 1, **characterized in that** the determining the compressor needs to be switched from the single-cylinder operation mode to the double-cylinder operation mode comprises:
determining the compressor needs to be switched from the single-cylinder operating mode to the double-cylinder operating mode under a condition that a current required operation frequency of the compressor is greater than a maximum frequency threshold value reached by the compressor in the single-cylinder operating mode,
wherein the current required operation frequency of the compressor is determined according to at least one of the following three factors : a difference value between a preset temperature value and an ambient temperature value, a preset gear of a fan or a capacity of an indoor unit of an air conditioning unit where the compressor is located.

3. The control method according to claim 1, **characterized in that** the adjusting system control parameters to make the system pressure difference value to be in the first preset system pressure difference value interval comprises at least one of the following steps:
reducing a rotation speed of an outdoor fan and a rotation speed of an indoor fan (S107) ; or
reducing a step count of an electronic expansion valve (9) of an outdoor unit and a step count of an electronic expansion valve (10) of an indoor unit (S108) .

4. The control method according to claim 3, **characterized in that**:
the reducing the rotation speed of the outdoor fan and the rotation speed of the indoor fan comprises:
controlling the outdoor fan and the indoor fan to be turned off;
the reducing the step count of the electronic expansion valve of the outdoor unit and the step count of the electronic expansion valve of the indoor unit comprises:
controlling the electronic expansion valve of the outdoor unit and the electronic expansion valve of the indoor unit to be turned off.

5. The control method according to claim 3, **characterized by** further comprising:
controlling the outdoor fan and the indoor fan to return to a normal operation state under a condition that the adjusting system control parameters to make the system pressure difference value to be in the first preset system pressure difference value interval comprises the reducing the rotation speed of the outdoor fan and the rotation speed of the indoor fan after the controlling the compressor to be switched from the single-cylinder operation mode to the double-cylinder operation mode, wherein the normal operation state is an automatic control state; or
controlling the electronic expansion valve of the outdoor unit and the electronic expansion valve of the indoor unit to return to a normal operation state under a condition that the adjusting system control parameters to make the system pressure difference value to be in the first preset system pressure difference value interval comprises the reducing the step count of the electronic expansion valve of the outdoor unit and the step count of the electronic expansion valve of the indoor unit after the controlling the compressor to be switched from the single-cylinder operation mode to the double-cylinder operation mode, wherein the normal operation state is an automatic control state.

6. The control method according to claim 1, **characterized by** further comprising:
providing single-cylinder torque compensation to the compressor (S105) before the controlling the compressor to be switched from the single-cylinder operation mode to the double-cylinder operation mode.

7. The control method according to claim 1, **characterized by** further comprising:
providing double-cylinder torque compensation to the compressor (S106) after the controlling the compressor to be switched from the single-cylinder operation mode to the double-cylinder operation mode.

8. The control method according to any one of claims 1-7, **characterized by** further comprising:
controlling a first electromagnetic valve to be powered down and a second electromagnetic valve to be powered up to make a variable capacitance port of the compressor to be in a low-pressure state before the controlling the compressor to be switched from the single-cylinder operation mode to the double-cylinder operation mode, wherein the first electromagnetic valve is used for communicating an air outlet port of the compressor with the variable capacitance port, and the air outlet port is in a high-pressure state, the second electromagnetic valve is used for communicating an air suction port of the compressor with the variable capacitance port, and the air suction port is in a low-pressure state.

9. The control method according to any of claims 1-7, **characterized in that** the controlling the compressor to be switched from the single-cylinder operation mode to the double-cylinder operation mode comprises:
controlling a first electromagnetic valve to be powered up and a second electromagnetic valve to be powered down to make a variable capacitance port of the compressor to be in a high-pressure state, wherein the first electromagnetic valve is used for communicating an air outlet port of the compressor with the variable capacitance port, and the air outlet port is in a high-pressure state, the second electromagnetic valve is used for communicating an air suction port of the compressor with variable capacitance port, and the air suction port is in a low-pressure state.

10. An air conditioning unit configured to perform the method in any one of claims 1 to 9, **characterized by** comprising:
a compressor (2);
a main controller (1) configured to determine the compressor (2) needs to be switched from a single-cylinder operation mode to a double-cylinder operation mode, decide whether a system pressure difference value is in a first preset system pressure difference value interval, adjust system control parameters to make the system pressure difference value to be in the first preset system pressure difference value interval under a condition that the system pressure difference value is not in the first preset system pressure difference value interval, and send a cylinder switching command to a driving controller (3) of the compressor (2);
the driving controller (3), connected with the main controller (1) and the compressor (2), configured to control the compressor (2) to be switched from the single-cylinder operation mode to the double-cylinder operation mode according to the cylinder switching command.

11. An control apparatus for switching a cylinder operation mode of a compressor, wherein the control apparatus is configured to perform the method in any one of claims 1 to 9, **characterized by** comprising:
a determining module (701), configured to determine the compressor (2) needs to be switched from a single-cylinder operation mode to a double-cylinder operation mode;
a deciding module (702), configured to decide whether a system pressure difference value is in a first preset system pressure difference value interval;
an adjusting module (703), configured to adjust system control parameters to make the system pressure difference value to be in the first preset system pressure difference value interval under a condition that a deciding result of the deciding module (702) is that the system pressure difference value is not in the first preset system pressure difference value interval;
a control module (704), configured to control the compressor (2) to be switched from the single-cylinder operation mode to the double-cylinder operation mode.

12. An air conditioning system, **characterized by** comprising the air conditioning unit (82) according to claim 10.

13. The system according to claim 12, **characterized in that** the air conditioning system (81) is a variable frequency and variable capacity air conditioning system.

14. A computer device, **characterized by** comprising:
a processor (91); and
a memory (92) coupled to the processor (91), storing program instructions which, when executed by the processor (91), cause the processor to implement the method of any of claims 1 to 9.

15. A computer readable storage medium, **characterized in that** the computer readable storage medium stores computer instructions which, when executed by a processor, implement the method of any one of claims 1-9.

## Patentansprüche

1. Verfahren zum Umschalten einer Zylinderbetriebsart eines Kompressors, **dadurch gekennzeichnet, dass** es Folgendes beinhaltet:
Bestimmen, dass der Kompressor von einer Einzelzylinder-Betriebsart auf eine Doppelzylinder-Betriebsart umgeschaltet werden muss (S101);
Entscheiden, ob ein Systemdruckdifferenzwert in einem ersten voreingestellten Systemdruckdifferenzwertintervall liegt (S102);
Einstellen von Systemsteuerparametern zum Bewirken, dass der Systemdruckdifferenzwert im ersten voreingestellten Systemdruckdifferenzintervall liegt (S 104), bei einer Bedingung, dass der Systemdruckwert-Intervall-Differenzwert nicht in dem ersten voreingestellten Systemdruckdifferenzwertintervall liegt, und
Steuern des Kompressors, so dass er von der Einzelzylinder-Betriebsart auf die Doppelzylinder-Betriebsart umgeschaltet wird (S104).

2. Steuerverfahren nach Anspruch 1, **dadurch gekennzeichnet, dass** das Bestimmen, dass der Kompressor von der Einzelzylinder-Betriebsart auf die Doppelzylinder-Betriebsart umgeschaltet werden muss, Folgendes beinhaltet:
Bestimmen, dass der Kompressor von der Einzelzylinder-Betriebsart auf die Doppelzylinder-Betriebsart umgeschaltet werden muss, bei einer Bedingung, dass eine aktuelle erforderliche Betriebsfrequenz des Kompressors größer ist als ein in der Einzelzylinder-Betriebsart erreichter Höchstfrequenzschwellenwert,
wobei die aktuelle erforderliche Betriebsfrequenz des Kompressors gemäß wenigstens einem der folgenden drei Faktoren bestimmt wird:
einem Differenzwert zwischen einem voreingestellten Temperaturwert und einem Umgebungstemperaturwert, einer voreingestellten Schaltstufe eines Lüfters oder einer Kapazität einer Inneneinheit einer Klimaanlage, wo sich der Kompressor befindet.

3. Steuerverfahren nach Anspruch 1, **dadurch gekennzeichnet, dass** das Einstellen von Systemsteuerparameter zum Bewirken, dass der Systemdruckdifferenzwert in dem ersten voreingestellten Systemdruckdifferenzwertintervall liegt, zumindest einen der folgenden Schritte beinhaltet:
Verringern einer Drehzahl eines Außenlüfters und einer Drehzahl eines Innenlüfters (S107); oder
Verringern einer Schrittzahl eines elektronischen Expansionsventils (9) einer Außeneinheit und einer Schrittzahl eines elektronischen Expansionsventils (10) einer Inneneinheit (S108).

4. Steuerverfahren nach Anspruch 3, **dadurch gekennzeichnet, dass**:
das Verringern der Drehzahl des Außenlüfters und der Drehzahl des Innenlüfters Folgendes beinhaltet:
Steuern des Außenlüfters und des Innenlüfters, so dass sie abgeschaltet werden;
das Verringern der Schrittzahl des elektronischen Expansionsventils der Außeneinheit und der Schrittzahl des elektronischen Expansionsventils der Inneneinheit Folgendes beinhaltet:
Steuern des elektronischen Expansionsventils der Außeneinheit und des elektronischen Expansionsventils der Inneneinheit, so dass sie abgeschaltet werden.

5. Steuerverfahren nach Anspruch 3, **dadurch gekennzeichnet, dass** es ferner Folgendes beinhaltet:
Steuern des Außenlüfters und des Innenlüfters, so dass sie in einen normalen Betriebszustand zurückkehren, bei einer Bedingung, dass die Einstellungssystemsteuerparameter bewirken, dass der Systemdruckdifferenzwert im ersten voreingestellten Systemdruckdifferenzwertintervall liegt, beinhaltet das Verringern der Drehzahl des Außenlüfters und der Drehzahl des Innenlüfters nach dem Steuern des Kompressors, so dass er von der Einzelzylinder-Betriebsart auf die Doppelzylinder-Betriebsart umgeschaltet wird, wobei der normale Betriebszustand ein Zustand automatischer Steuerung ist; oder
Steuern des elektronischen Expansionsventils der Außeneinheit und des elektronischen Expansionsventils der Inneneinheit, so dass sie in einen normalen Betriebszustand zurückkehren, bei einer Bedingung, dass die Einstellungssystemsteuerparameter bewirken, dass der Systemdruckdifferenzwert im ersten voreingestellten Systemdruckdifferenzwertintervall liegt, beinhaltet das Verringern der Schrittzahl des elektronischen Expansionsventils der Außeneinheit und der Schrittzahl des elektronischen Expansionsventils der Inneneinheit nach dem Steuern des Kompressors, so dass er von der Einzelzylinder-Betriebsart auf die Doppelzylinder-Betriebsart umgeschaltet wird, wobei der normale Betriebszustand ein Zustand automatischer Steuerung ist.

6. Steuerverfahren nach Anspruch 1, **dadurch gekennzeichnet, dass** es ferner Folgendes beinhaltet:
Bereitstellen einer Einzelzylinder-Drehmomentkompensation für den Kompressor (S105) vor dem Steuern des Kompressors, so dass er von der Einzelzylinder-Betriebsart auf die Doppelzylinder-Betriebsart umgeschaltet wird.

7. Steuerverfahren nach Anspruch 1, **dadurch gekennzeichnet, dass** es ferner Folgendes beinhaltet:
Bereitstellen einer Doppelzylinder-Drehmomentkompensation für den Kompressor (S106) nach dem Steuern des Kompressors, so dass er von der Einzelzylinder-Betriebsart auf die Doppelzylinder-Betriebsart umgeschaltet wird.

8. Steuerverfahren nach einem der Ansprüche 1 bis 7, **dadurch gekennzeichnet, dass** es ferner Folgendes beinhaltet:
Steuern eines ersten elektromagnetischen Ventils, so dass es ausgeschaltet wird, und eines zweiten elektromagnetischen Ventils, so dass es eingeschaltet wird, um einen Anschluss für variable Leistung des Kompressors in einen Niederdruckzustand zu versetzen, vor dem Steuern des Kompressors, so dass er von der Einzelzylinder-Betriebsart auf die Doppelzylinder-Betriebsart umgeschaltet wird, wobei das erste elektromagnetische Ventil zum Versetzen eines Luftauslassanschlusses des Kompressors in Kommunikation mit dem Anschluss für variable Leistung verwendet wird und der Luftauslassanschluss in einem Hochdruckzustand ist, das zweite elektromagnetische Ventil zum Versetzen eines Luftsauganschlusses des Kompressors in Kommunikation mit dem Anschluss für variable Leistung verwendet wird und der Luftsauganschluss in einem Niederdruckzustand ist.

9. Steuerverfahren nach einem der Ansprüche 1 bis 7, **dadurch gekennzeichnet, dass** das Steuern des Kompressors, so dass er von der Einzelzylinder-Betriebsart auf die Doppelzylinder-Betriebsart umgeschaltet wird, Folgendes beinhaltet:
Steuern eines ersten elektromagnetischen Ventils, so dass es eingeschaltet wird, und eines zweiten elektromagnetischen Ventils, so dass es ausgeschaltet wird, zum Versetzen eines Anschlusses für variable Leistung des Kompressors in einen Hochdruckzustand, wobei das erste elektromagnetische Ventil zum Versetzen eines Luftauslassanschlusses des Kompressors in Kommunikation mit dem Anschluss für variable Leistung verwendet wird und der Luftauslassanschluss in einem Hochdruckzustand ist, das zweite elektromagnetische Ventil zum Versetzen eines Luftsauganschlusses des Kompressors in Kommunikation mit dem Anschluss für variable Leistung verwendet wird und der Luftsauganschluss in einem Niederdruckzustand ist.

10. Klimaanlage, die zum Durchführen des Verfahrens nach einem der Ansprüche 1 bis 9 konfiguriert ist, **dadurch gekennzeichnet, dass** sie Folgendes beinhaltet:
einen Kompressor (2);
einen Haupt-Controller (1), die konfiguriert ist zum Bestimmen, dass der Kompressor (2) von einer Einzelzylinder-Betriebsart auf eine Doppelzylinder-Betriebsart umgeschaltet werden muss, Entscheiden, ob ein Systemdruckdifferenzwert in einem ersten voreingestellten Systemdruckdifferenzwertintervall liegt, Einstellen von Systemsteuerparametern zum Bewirken, dass der Systemdruckdifferenzwert im ersten voreingestellten Systemdruckdifferenzintervall liegt, bei einer Bedingung, dass der Systemdruckwert-Intervall-Differenzwert nicht in dem ersten voreingestellten Systemdruckdifferenzwertintervall liegt, und Senden eines Zylinderumschaltbefehls an einen Ansteuer-Controller (3) des Kompressors (2);
den mit dem Haupt-Controller (1) und dem Kompressor (2) verbundenen Ansteuer-Controller (3), der konfiguriert ist zum Steuern des Kompressors (2), so dass er von der Einzelzylinder-Betriebsart auf die Doppelzylinder-Betriebsart umgeschaltet wird, gemäß dem Zylinderumschaltbefehl.

11. Steuervorrichtung zum Umschalten einer Zylinderbetriebsart eines Kompressors, wobei die Steuervorrichtung zum Durchführen des Verfahrens nach einem der Ansprüche 1 bis 9 konfiguriert ist, **dadurch gekennzeichnet, dass** sie Folgendes beinhaltet:
ein Bestimmungsmodul (701), das zum Bestimmen, dass der Kompressor (2) von einer Einzelzylinder-Betriebsart auf eine Doppelzylinder-Betriebsart umgeschaltet werden muss, konfiguriert ist;
ein Entscheidungsmodul (702), das zum Entscheiden, ob ein Systemdruckdifferenzwert in einem ersten voreingestellten Systemdruckdifferenzwertintervall liegt, konfiguriert ist;
ein Einstellmodul (703), das zum Einstellen von Systemsteuerparametern zum Bewirken, dass der Systemdruckdifferenzwert in dem ersten voreingestellten Systemdruckdifferenzintervall liegt, bei einer Bedingung, dass ein Entscheidungsergebnis des Entscheidungsmoduls (702) ist, dass der Systemdruckwert-Intervall-Differenzwert nicht in dem ersten voreingestellten Systemdruckdifferenzwertintervall liegt, konfiguriert ist;
ein Steuermodul (704), das zum Steuern des Kompressors (2), so dass er von der Einzelzylinder-Betriebsart auf die Doppelzylinder-Betriebsart umgeschaltet wird, konfiguriert ist.

12. Klimaanlagensystem, **dadurch gekennzeichnet, dass** es die Klimaanlage (82) nach Anspruch 10 beinhaltet.

13. System nach Anspruch 12, **dadurch gekennzeichnet, dass** das Klimaanlagensystem (81) ein Klimaanlagensystem mit variabler Frequenz und variabler Leistung ist.

14. Rechner, **dadurch gekennzeichnet, dass** er Folgendes beinhaltet:
einen Prozessor (91); und
einen mit dem Prozessor (91) gekoppelten Speicher (92), der Programmanweisungen speichert, die bei Ausführung durch den Prozessor (91) den Prozessor zum Implementieren des Verfahrens nach einem der Ansprüche 1 bis 9 veranlasst.

15. Rechnerlesbares Speichermedium, **dadurch gekennzeichnet, dass** das rechnerlesbare Speichermedium rechnerlesbare Anweisungen speichert, die bei Ausführung durch einen Prozessor das Verfahren nach einem der Ansprüche 1 bis 9 implementieren.

## Revendications

1. Procédé de commande pour commuter un mode de fonctionnement de cylindre d'un compresseur, caractérisé en comprenant :
déterminer que le compresseur a besoin d'être commuté d'un mode de fonctionnement monocylindre à un mode de fonctionnement bicylindre (S 101) ;
décider si une valeur de différence de pression système est dans un premier intervalle de valeur de différence de pression système préréglé (S 102) ;
ajuster des paramètres de commande du système pour faire que la valeur de différence de pression système soit dans le premier intervalle de valeur de différence de pression système préréglé (S103) dans une condition dans laquelle la valeur de différence de pression système n'est pas dans le premier intervalle de valeur de différence de pression système préréglé ; et
commander le compresseur pour le faire commuter du mode de fonctionnement monocylindre au mode de fonctionnement bicylindre (S104).

2. Procédé de commande selon la revendication 1, **caractérisé en ce que** le fait de déterminer que le compresseur a besoin d'être commuté du mode de fonctionnement monocylindre au mode de fonctionnement bicylindre comprend :
déterminer que le compresseur a besoin d'être commuté du mode de fonctionnement monocylindre au mode de fonctionnement bicylindre dans une condition dans laquelle une fréquence de fonctionnement requise couramment du compresseur est plus grande qu'une valeur seuil de fréquence maximale atteinte par le compresseur dans le mode de fonctionnement monocylindre,
dans lequel la fréquence de fonctionnement requise couramment du compresseur est déterminée conformément à au moins l'un des trois facteurs suivants :
une valeur de différence entre une valeur de température préréglée et une valeur de température ambiante, une vitesse préréglée d'un ventilateur ou une capacité d'une unité intérieure d'une unité de climatisation dans laquelle le compresseur est situé.

3. Procédé de commande selon la revendication 1, **caractérisé en ce que** le fait d'ajuster des paramètres de commande du système pour faire que la valeur de différence de pression système soit dans le premier intervalle de valeur de différence de pression système préréglé comprend au moins l'une des étapes suivantes :
réduire une vitesse de rotation d'un ventilateur extérieur et une vitesse de rotation d'un ventilateur intérieur (S107) ; ou
réduire un compte de pas d'un détendeur électronique (9) d'une unité extérieure et un compte de pas d'un détendeur électronique (10) d'une unité intérieure (S108).

4. Procédé de commande selon la revendication 3, **caractérisé en ce que** :
réduire la vitesse de rotation du ventilateur extérieur et la vitesse de rotation du ventilateur intérieur comprend :
commander le ventilateur extérieur et le ventilateur intérieur pour les faire arrêter ;
le fait de réduire le compte de pas du détendeur électronique de l'unité extérieure et le compte de pas du détendeur électronique de l'unité intérieure comprend :
commander le détendeur électronique de l'unité extérieure et le détendeur électronique de l'unité intérieure pour les faire arrêter.

5. Procédé de commande selon la revendication 3, caractérisé en comprenant en outre :
commander au ventilateur extérieur et au ventilateur intérieur de retourner à un état de fonctionnement normal dans une condition dans laquelle le fait d'ajuster des paramètres de commande du système pour faire que la valeur de différence de pression système soit dans le premier intervalle de valeur de différence de pression système préréglé comprend le fait de réduire la vitesse de rotation du ventilateur extérieur et la vitesse de rotation du ventilateur intérieur après le fait de commander le compresseur pour le faire commuter du mode de fonctionnement monocylindre au mode de fonctionnement bicylindre, dans lequel l'état de fonctionnement normal est un état de commande automatique ; ou
commander au détendeur électronique de l'unité extérieure et au détendeur électronique de l'unité intérieure de retourner à un état de fonctionnement normal dans une condition dans laquelle le fait d'ajuster des paramètres de commande du système pour faire que la valeur de différence de pression système soit dans le premier intervalle de valeur de différence de pression système préréglé comprend le fait de réduire le compte de pas du détendeur électronique de l'unité extérieure et le compte de pas du détendeur électronique de l'unité intérieure après le fait de commander le compresseur pour le faire commuter du mode de fonctionnement monocylindre au mode de fonctionnement bicylindre, dans lequel l'état de fonctionnement normal est un état de commande automatique.

6. Procédé de commande selon la revendication 1, caractérisé en comprenant en outre :
fournir une compensation de couple monocylindre au compresseur (S 105) avant le fait de commander le compresseur pour le faire commuter du mode de fonctionnement monocylindre au mode de fonctionnement bicylindre.

7. Procédé de commande selon la revendication 1, caractérisé en comprenant en outre :
fournir une compensation de couple bicylindre au compresseur (S 106) après le fait de commander le compresseur pour le faire commuter du mode de fonctionnement monocylindre au mode de fonctionnement bicylindre.

8. Procédé de commande selon l'une quelconque des revendications 1-7, caractérisé en comprenant en outre :
commander une première électrovanne pour la mettre hors tension et une deuxième électrovanne pour la mettre sous tension pour faire qu'un orifice de capacité variable du compresseur soit dans un état de basse pression avant de commander le compresseur pour le faire commuter du mode de fonctionnement monocylindre au mode de fonctionnement bicylindre, dans lequel la première électrovanne est utilisée pour faire communiquer un orifice de sortie d'air du compresseur avec l'orifice de capacité variable, et l'orifice de sortie d'air est dans un état de haute pression, la deuxième électrovanne est utilisée pour faire communiquer un orifice d'aspiration d'air du compresseur avec l'orifice de capacité variable, et l'orifice d'aspiration d'air est dans un état de basse pression.

9. Procédé de commande selon l'une quelconque des revendications 1-7, **caractérisé en ce que** le fait de commander le compresseur pour le faire commuter du mode de fonctionnement monocylindre au mode de fonctionnement bicylindre comprend :
commander une première électrovanne pour la mettre sous tension et une deuxième électrovanne pour la mettre hors tension pour faire qu'un orifice de capacité variable du compresseur soit dans un état de haute pression, dans lequel la première électrovanne est utilisée pour faire communiquer un orifice de sortie d'air du compresseur avec l'orifice de capacité variable, et l'orifice de sortie d'air est dans un état de haute pression, la deuxième électrovanne est utilisée pour faire communiquer un orifice d'aspiration d'air du compresseur avec l'orifice de capacité variable, et l'orifice d'aspiration d'air est dans un état de basse pression.

10. Unité de climatisation configurée pour mettre en oeuvre le procédé selon l'une quelconque des revendications 1 à 9, **caractérisée** en comprenant :
un compresseur (2) ;
un contrôleur principal (1) configuré pour déterminer que le compresseur (2) a besoin **d'être commuté** d'un mode de fonctionnement monocylindre à un mode de fonctionnement bicylindre, décider si une valeur de différence de pression système est dans un premier intervalle de valeur de différence de pression système préréglé, ajuster des paramètres de commande du système pour faire que la valeur de différence de pression système soit dans le premier intervalle de valeur de différence de pression système préréglé dans une condition dans laquelle la valeur de différence de pression système n'est pas dans le premier intervalle de valeur de différence de pression système préréglé, et envoyer une commande de commutation de cylindre à un contrôleur d'entraînement (3) du compresseur (2) ;
le contrôleur d'entraînement (3), connecté au contrôleur principal (1) et au compresseur (2), étant configuré pour commander le compresseur (2) pour le faire commuter du mode de fonctionnement monocylindre au mode de fonctionnement bicylindre conformément à la commande de commutation de cylindre.

11. Appareil de commande pour commuter un mode de fonctionnement de cylindre d'un compresseur, où l'appareil de commande est configuré pour mettre en oeuvre le procédé selon l'une quelconque des revendications 1 à 9, caractérisé en comprenant :
un module de détermination (701), configuré pour déterminer que le compresseur (2) a besoin d'être commuté d'un mode de fonctionnement monocylindre à un mode de fonctionnement bicylindre ;
un module de décision (702), configuré pour décider si une valeur de différence de pression système est dans un premier intervalle de valeur de différence de pression système préréglé ;
un module d'ajustement (703), configuré pour ajuster des paramètres de commande du système pour faire que la valeur de différence de pression système soit dans le premier intervalle de valeur de différence de pression système préréglé dans une condition dans laquelle un résultat de décision du module de décision (702) est que la valeur de différence de pression système n'est pas dans le premier intervalle de valeur de différence de pression système préréglé ;
un module de commande (704), configuré pour commander le compresseur (2) pour le faire commuter du mode de fonctionnement monocylindre au mode de fonctionnement bicylindre.

12. Système de climatisation, caractérisé en comprenant l'unité de climatisation (82) selon la revendication 10.

13. Système selon la revendication 12, **caractérisé en ce que** le système de climatisation (81) est un système de climatisation à fréquence variable et à capacité variable.

14. Dispositif informatique, caractérisé en comprenant :
un processeur (91) ; et
une mémoire (92) couplée au processeur (91), stockant des instructions de programme qui, lorsque exécutées par le processeur (91), font que le processeur mette en oeuvre le procédé selon l'une quelconque des revendications 1 à 9.

15. Support de stockage lisible par ordinateur, **caractérisé en ce que** le support de stockage lisible par ordinateur stocke des instructions informatiques qui, lorsque exécutées par un processeur, mettent en oeuvre le procédé selon l'une quelconque des revendications 1-9.
